# EUROPEAN PATENT APPLICATION

(11) **EP 4 379 459 A1**
(43) Date of publication of application: **05.06.2024**
(21) Application number: 23150156.0
(22) Date of filing: 03.01.2023
(51) Int. Cl.: G03B 3/10, G02B 7/10, G03B 17/14, G03B 17/56, H04N 23/55, H04N 23/663

(54) **CAMERA LENS ASSEMBLY**

(30) Priority: 30.11.2022 KR 20220164344
(71) Applicant: Samyang Optics Co., Ltd, Changwon-si, Gyeongsangnam-do 51343 (KR)
(72) Inventor: LEE, Ji Hoon, GYEONGGI-DO (KR); LEE, Han Jea, GYEONGSANGNAM-DO (KR); LEE, Hyun Hee, SEOUL (KR)
(74) Representative: Glawe, Delfs, Moll

(57) **Abstract**

A camera lens assembly includes a plurality of optical lenses accommodated in the camera lens assembly, a first lens mount for detachably mounting the camera lens assembly to the camera body, a first electric connector formed on a rear face of the camera lens assembly, wherein the first electric connector is electrically coupled to the camera body when the camera lens assembly is mounted on the camera body, a second lens mount formed on a front face of the camera lens assembly, wherein the second lens mount is configured for detachably attaching an extension adapter extending an optical function of the camera lens assembly to the camera lens assembly, a second electric connector formed on the front face of the camera lens assembly, wherein the second electric connector is electrically coupled to the extension adapter when the extension adapter is mounted on the camera lens assembly, a lens communication unit connected to the first electric connector so as to transmit and receive an electrical signal between the camera lens assembly and the camera body, wherein the lens communication unit is connected to the second electric connector so as to transmit and receive an electrical signal between the extension adapter and the camera lens assembly, and a lens driver for controlling a movement of each of the plurality of optical lenses, based on the electrical signal received from the camera body.

## Description

### CROSS-REFERENCE TO RELATED APPLICATION

This application claims priority from Korean Patent Application No. 10-2022-0164344 filed on November 30, 2022, in the Korean Intellectual Property Office, and all the benefits accruing therefrom under 35 U.S.C. 119, the contents of which in its entirety are herein incorporated by reference.

### BACKGROUND

### Field

The present disclosure relates to a camera lens assembly detachable from a camera body, and more particularly, to a camera lens assembly capable of communicating with the camera body and controlling movement of a plurality of optical lenses by itself.

### Description of Related Art

In general, a camera accessory detachable from a camera body receives power from the camera body while being attached to the camera body, or communicates various commands or data with the camera body. An element that physically mounts the camera accessory in a detachable manner to the camera body for the power supply or communication as described above is called a mount. When the camera accessory is mounted in a detachable manner to the camera body using the mount, a plurality of terminals installed near the mount contact each other and thus are electrically connected to each other.

A representative example of the camera accessory is a camera lens assembly. The camera lens assembly has a lens driver, a processor, and a communication unit to perform zooming and focusing functions by itself, and is a kind of an independently manufactured/sold electro-optical device.

However, in imaging an imaging target person by the camera body equipped with such a camera lens assembly, it is difficult for the imaging target person to intuitively check an imaging status of the camera. Thus, the imaging target person should receive a current imaging status via a separate path. This is inconvenient. This is the result of not fully utilizing advantages of the camera lens assembly as the electro-optical device.

As described above, the camera lens assembly has a basic optical system and may perform the zooming or focusing function by itself by driving some lenses in the optical system. However, it is necessary to further include special lenses for imaging under special conditions. However, when these special lenses are disposed in the camera lens assembly, a length of the optical system in the camera lens assembly becomes larger, a weight of the camera lens assembly increases, and a manufacturing cost rises up.

Therefore, it is necessary to develop a mounting structure capable of attaching and detaching a separate extension adapter having the special lens to the camera lens assembly according to imaging conditions.

### SUMMARY

A technical purpose to be achieved by the present disclosure is to provide a camera lens assembly having a mounting structure to or from which an extension adapter having a special lens may be easily attached or detached according to imaging conditions.

Another technical purpose to be achieved by the present disclosure is to provide a camera lens assembly capable of controlling movement of a general focusing lens within the camera lens assembly in association with displacement of a special focusing lens within an extension adapter.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

According to an aspect of an exemplary embodiment, there is provided a camera lens assembly capable of communicating with a camera body and having a processor and a memory disposed therein, and the camera lens assembly includes: a plurality of optical lenses accommodated in the camera lens assembly; a first lens mount for detachably mounting the camera lens assembly to the camera body; a first electric connector formed on a rear face of the camera lens assembly, wherein the first electric connector is electrically coupled to the camera body when the camera lens assembly is mounted on the camera body; a second lens mount formed on a front face of the camera lens assembly, wherein the second lens mount is configured for detachably attaching an extension adapter extending an optical function of the camera lens assembly to the camera lens assembly; a second electric connector formed on the front face of the camera lens assembly, wherein the second electric connector is electrically coupled to the extension adapter when the extension adapter is mounted on the camera lens assembly; a lens communication unit connected to the first electric connector so as to transmit and receive an electrical signal between the camera lens assembly and the camera body, wherein the lens communication unit is connected to the second electric connector so as to transmit and receive an electrical signal between the extension adapter and the camera lens assembly; and a lens driver for controlling a movement of each of the plurality of optical lenses, based on the electrical signal received from the camera body.

The plurality of optical lenses may include a first focusing lens, wherein the extension adapter includes a second focusing lens.

The second focusing lens may be embodied as an anamorphic focusing lens.

The second electric connector may receive a signal indicating a displacement of the second focusing lens from the extension adapter, wherein the processor calculates a displacement of the first focusing lens corresponding to the displacement of the second focusing lens, wherein the lens driver controls a movement of the first focusing lens based on the calculated displacement of the first focusing lens.

The signal indicating the displacement of the second focusing lens may include a value measured using a potentiometer disposed in the extension adapter.

The second electric connector may include: a first terminal for receiving the signal indicating the displacement of the second focusing lens from the extension adapter; and a second terminal for supplying power generated in the camera body or the camera lens assembly to the extension adapter.

The second lens mount may include a plurality of bayonet claws, wherein the second electric connector is positioned on a portion of a circumferential area of the front face of the camera lens assembly in which the plurality of bayonet claws are absent.

The second electric connector may be positioned on a lower side of the front face of the camera lens assembly.

The camera lens assembly may further include a switch for receiving a selected one of a plurality of functions provided by the camera lens assembly from a user, wherein the lens driver controls a displacement of each of the plurality of optical lenses disposed in the camera lens assembly based on a mode indicated by the switch.

According to the camera lens assembly according to the present disclosure, the extension adapter having a special lens may be detachably mounted to the camera lens assembly according to imaging conditions. Thus, imaging that meets various imaging conditions, including special imaging conditions and general imaging conditions may be achieved.

Further, according to the camera lens assembly according to the present disclosure, the movement of the general focusing lens in the camera lens assembly may be controlled in conjunction with the displacement of the special focusing lens in the extension adapter. Thus, the hassle that the user should individually perform the focusing operation of the extension adapter and the focusing operation of the camera lens assembly may be eliminated.

### BRIEF DESCRIPTION OF DRAWINGS

The above and other aspects and features of the present disclosure will become more apparent by describing in detail illustrative embodiments thereof with reference to the attached drawings, in which:
FIG. 1 is an exploded perspective view showing a camera lens assembly and a camera body according to an embodiment of the present disclosure;
FIG. 2A is a perspective view of a camera lens assembly according to an embodiment of the present disclosure;
FIG. 2B is a side view of the camera lens assembly;
FIG. 2C is a front view of the camera lens assembly;
FIG. 2D is a rear view of the camera lens assembly'
FIG. 3 is a rear perspective view of an extension adapter according to an embodiment of the present disclosure;
FIG. 4 is a side view of a camera lens assembly equipped with an extension adapter according to an embodiment of the present disclosure;
FIG. 5 is a longitudinal cross-sectional view of a camera lens assembly equipped with an extension adapter according to an embodiment of the present disclosure; and
FIG. 6 is a block diagram showing an internal configuration of each of an extension adapter, a camera lens assembly, and a camera body according to an embodiment of the present disclosure.

### DETAILED DESCRIPTIONS

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

Hereinafter, exemplary embodiments of the present disclosure will be described in detail with reference to the accompanying drawings.

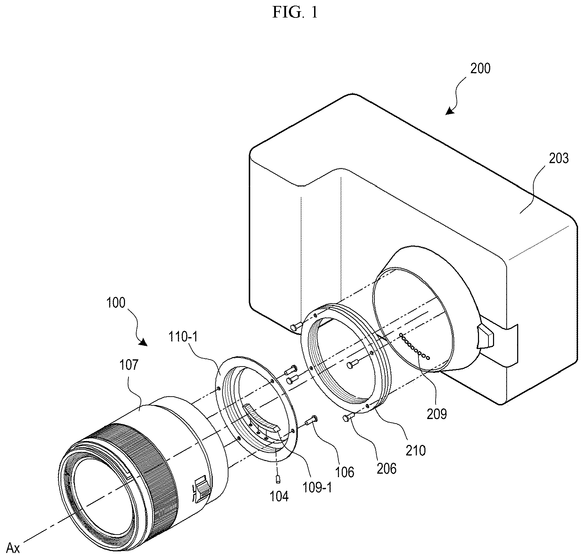

FIG. 1 is an exploded perspective view showing a camera lens assembly 100 and a camera body 200 according to an embodiment of the present disclosure.

An optical axis Ax is an axis representing a center of light flux from a subject facing the camera lens assembly 100. The camera lens assembly 100 and the camera body 200 may be fixed to each other via a lock pin (not shown) in a state in which contact faces of a first lens mount 110-1 and a camera mount 210 are in contact with each other.

A camera housing 203 is a housing that receives components of the camera body 200. More specifically, the camera housing 203 includes a camera mount 210, a camera electric connector 209 serving as a connector between communication units, and a camera mount fixing member 206.

The first lens mount 110-1 is fixed to a lens barrel 107 via a first lens mount fixing member 106. A first electric connector 109-1 is installed on the camera lens assembly 100 and is fixed to the first lens mount 110-1 via a fixing member 104. Therefore, when assembling the camera lens assembly 100 and the camera body 200 with each other, the first electric connector 109-1 electrically contacts the camera electric connector 209, so that the camera lens assembly 100 and the camera body 200 communicate with each other.

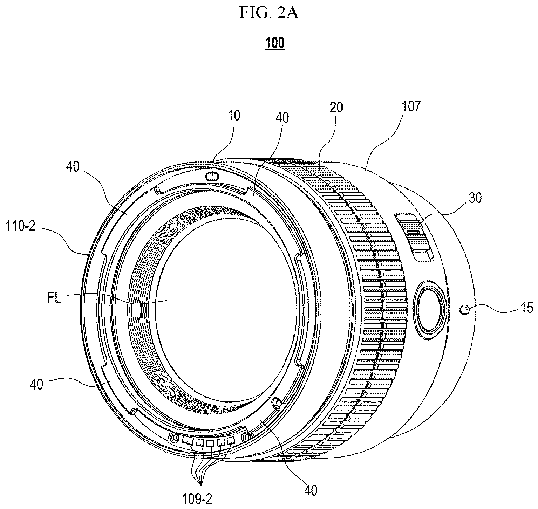

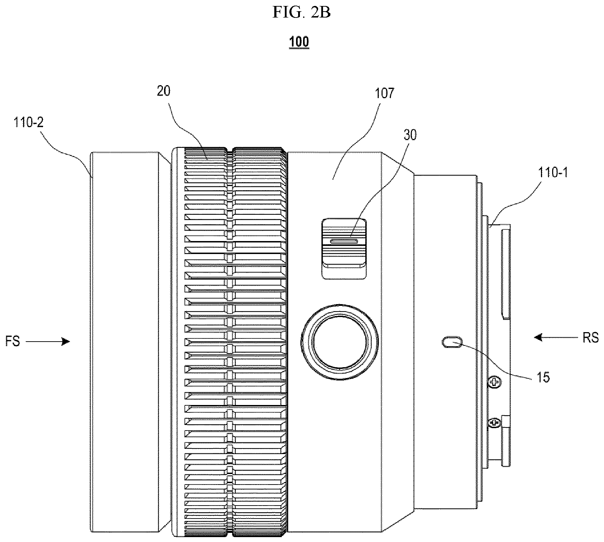

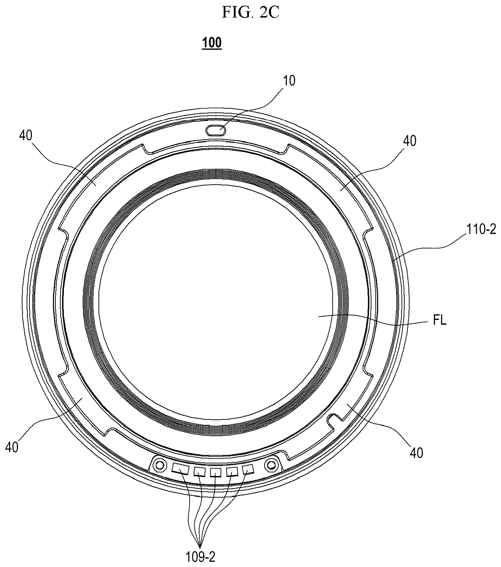

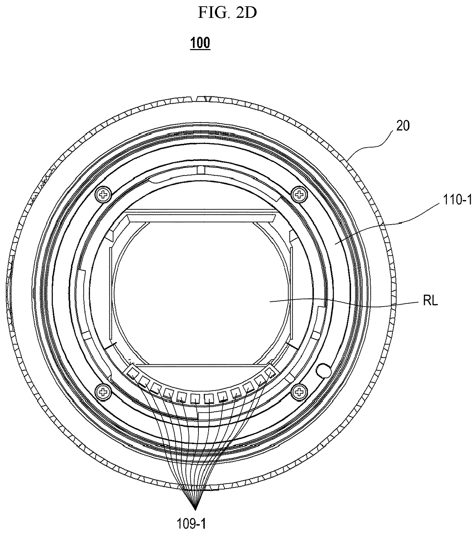

FIG. 2A is a perspective view of the camera lens assembly 100 according to an embodiment of the present disclosure, FIG. 2B is a side view of the camera lens assembly 100, FIG. 2C is a front view of the camera lens assembly 100, and FIG. 2D is a rear view of the camera lens assembly 100.

As shown, the camera lens assembly 100 accommodates therein a plurality of optical lenses LU. However, in FIG. 2A and FIG. 2C, only a first lens FL closest to an object among the plurality of optical lenses LU is observed, while in FIG. 2D, only a last lens RL closest to an image among the plurality of optical lenses LU is observed. The type and the number of the optical lenses LU may vary depending on performance or an application of the camera lens assembly 100.

Further, the camera lens assembly 100 may include the first lens mount 110-1 installed on a rear face RS of the camera lens assembly 100, and may further include a second lens mount 110-2 installed on a front face FS of the camera lens assembly 100.

The first lens mount 110-1 is an element that detachably mounts the camera lens assembly 100 to the camera body 200. The second lens mount 110-2 is an element for detachably mounting an extension adapter for extending an optical function of the camera lens assembly 100 to the camera lens assembly 100. For such mounting, for example, each of the first lens mount 110-1 and/or the second lens mount 110-2 may include a plurality of bayonet claws 40.

In accordance with the present disclosure, the camera lens assembly 100 is a device mounted on the camera body 200 while accommodating therein the plurality of optical lenses. The extension adapter is additionally mounted at a front end of the camera lens assembly 100 providing basic optical functions and serves to expand the optical functions. For example, the extension adapter may be a device having a special lens such as an anamorphic lens. The anamorphic lens is a lens designed for imaging and projection of a wide screen movie, and records an image on a film mounted on a camera in a contracted manner. When the recorded image is projected, a special lens that acts in an opposite manner to the manner in which the anamorphic lens acts is mounted on a projector such that the screen may be reproduced normally.

A displacement for focusing of the anamorphic lens has a predefined function relationship with a displacement of a focusing lens among the plurality of optical lenses LU. Therefore, the displacement of the focusing lens of the camera lens assembly 100 needs to be simultaneously controlled in conjunction with the displacement of the anamorphic focusing lens of the extension adapter.

Further, the electric connector 109-1 which is electrically coupled to the camera body 200 when the camera lens assembly 100 is mounted on the camera body 200 is disposed on the rear face RS on which the first lens mount 110-1 has been installed.

Similarly, a second electric connector 109-2 which is electrically coupled to the extension adapter when the extension adapter is mounted on the camera lens assembly 100 is disposed on the front face FS on which the second lens mount 110-2 has been installed. When the extension adapter is a device having the anamorphic lens, the displacement of the anamorphic focusing lens may be determined based on a measured value of a built-in potentiometer. For example, when a user rotates a manual ring included in the extension adapter, the anamorphic focusing lens is displaced based on a rotation angle of the manual ring. At this time, the measured value (resistance value) of the potentiometer varies according to the rotation angle of the manual ring, the displacement of the focusing lens may be determined based on this measured value. The measured value of the potentiometer may be transferred to the camera lens assembly 100 via the second electric connector 109-2.

Referring to FIG. 2C and FIG. 2D, it is illustrated that the second electric connector 109-2 is composed of 5 contact terminals and the first electric connector 109-1 is composed of 12 contact terminals. However, the number of the contact terminals may vary depending on the performance or an application of the camera. However, it may be general that due to a difference between the numbers of exchanged information of the second electric connector 109-2 and the first electric connector 109-1, the number of contact terminals of the first electric connector 109-1 is greater than the number of contact terminals of the second electric connector 109-2.

For example, the first electric connector 109-1 may have a VDD terminal and a VBAT terminal for supplying power from the camera body 200 to the camera lens assembly 100, and a DGND terminal and a PGND terminal for grounding. Further, the first electric connector 109-1 may further include an LCLK terminal, a DCL terminal, a DCL2 terminal, a CS terminal, and a DCA terminal for communication between the communication units. Further, the first electric connector 109-1 may further have, as other terminals, a MIF terminal that detects that the camera lens assembly 100 is mounted on the camera body 200, and a TYPE terminal for determining a type of a camera accessory mounted on the camera body 200.

In one example, the second electric connector 109-2 may have a terminal A for transmitting a signal representing the measured value of the potentiometer (corresponding to the displacement of the anamorphic focusing lens) to the camera lens assembly 100, and a terminal B for supplying power generated in the camera body 200 or the camera lens assembly 100 to the extension adapter. In another example, when the extension adapter itself has a separate power source, this terminal B may be omitted.

Referring back to FIG. 2A, FIG. 2B, and FIG. 2C, the camera lens assembly 100 according to an embodiment of the present disclosure may have at least one or more indicators 10 and 15 for visually displaying an imaging state of the camera body 200, based on an electrical signal received from the camera body 200.

In particular, the at least one or more indicators 10 and 15 may be installed on the front face FS of the camera lens assembly 100 so that the imaging target person imaged by the camera body 200 may visually recognize the imaging state of the camera body 200. Conventionally, since an indicator indicating an imaging state (e.g., power ON, imaging in progress, standby mode, etc.) is installed on the barrel of the camera body 200 or the camera lens assembly 100, it is difficult for the imaging target person to immediately known the imaging state. Therefore, a person manipulating the camera should present the imaging state to the imaging target person using a separate lamp or a hand signal. This is inconvenient. In contrast thereto, in accordance with the present disclosure, the indicator 10 is installed on the front face FS of the camera lens assembly 100 itself, such that the imaging target person may immediately grasp the current imaging state via the indicator. The indicator 10 may be implemented as a figure-shaped lamp (e.g., a circular, oval, square shaped lamp, etc.) or a letter-shaped lamp (e.g., "REC"), and may display different colors depending on the imaging state.

Referring to FIG. 2C, in one embodiment of the present disclosure, the indicator 10 and the second electric connector 109-2 may be positioned on the front face FS of the camera lens assembly 100 and in a portion of a circumferential area where the plurality of bayonet claws 40 are not formed. Further, while being disposed on the front face FS of the camera lens assembly 100, the indicator 10 and the second electric connector 109-2 may be positioned in an opposite manner to each other in the circumferential direction. Preferably, the indicator 10 may be positioned on an upper area of the front face FS of the camera lens assembly 100, while the second electric connector 109-2 may be positioned on a lower area of the front face FS of the camera lens assembly 100.

Due to the above-described arrangement of the indicator 10 and the electric connector 109-2, the imaging target person may easily recognize the indicator 10 while physical interference may be avoided when the extension adapter is mounted on the camera lens assembly 100.

In one example, not only the indicator 10 may be disposed on the front face FS of the camera lens assembly 100 so that the imaging target person may visually recognize the imaging state, bus also second indicator 15 may be additionally disposed on the barrel 107 so that a person manipulating the camera may visually recognize the imaging state. Except for the arrangement position, a function and an operation of the second indicator 15 may be configured to be the same as those of the indicator 10.

Further, referring to FIG. 2A and FIG. 2B, the barrel 107 of the camera lens assembly 100 may include a switch 30 via which the user selects one of a plurality of functions. The plurality of functions may include, for example, manual focus, auto focus, iris control, and the like. The selection of the switch may allow adaptive control to be performed on the plurality of optical lenses LU, an aperture AU, etc., so that the operation and the function of the camera lens assembly 100 may be changed. This enables one of various functions provided by the camera lens assembly 100 to be selected without using a user interface provided in the camera body 200.

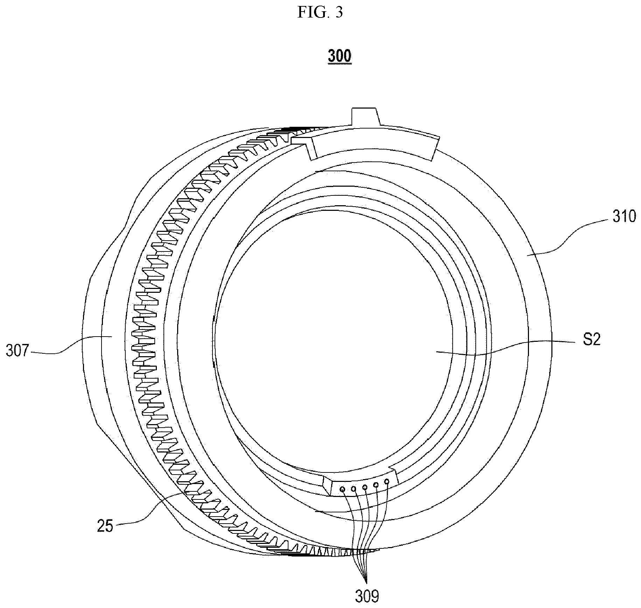

FIG. 3 is a rear perspective view of an extension adapter 300 according to an embodiment of the present disclosure. A plurality of special lenses disposed in the extension adapter 300 may include anamorphic lenses. Alternatively, some of the plurality of special lenses may include anamorphic focusing lenses movable in response to the user manipulating a manual ring 25. However, in FIG. 3, a last special lens S2 among the special lenses may be observed.

The extension adapter 300 has an adapter mount 310 on a rear face thereof. The adapter mount 310 of the extension adapter 300 may be combined with the second lens mount 110-2 of the camera lens assembly 100. Further, an adapter connector 309 is disposed near a location of the extension adapter 300 at which the adapter mount 310 is disposed. Accordingly, when the mounts 110-2 and 310 are coupled to each other, the adapter connector 309 and the second electric connector 109-2 are electrically connected to each other. Therefore, the number of contact terminals provided in the adapter connector 309 and the number of contact terminals provided in the second electric connector 109-2 are equal to each other.

Further, a barrel 307 of the extension adapter 300 is provided with the manual ring 25 rotatable with respect to the barrel 307. Therefore, when the user rotates the manual ring 25, the anamorphic focusing lens moves based on the rotation angle of the manual ring 25.

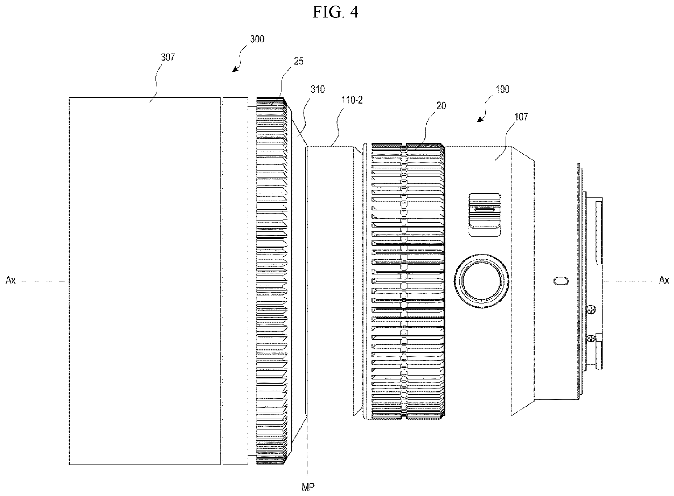

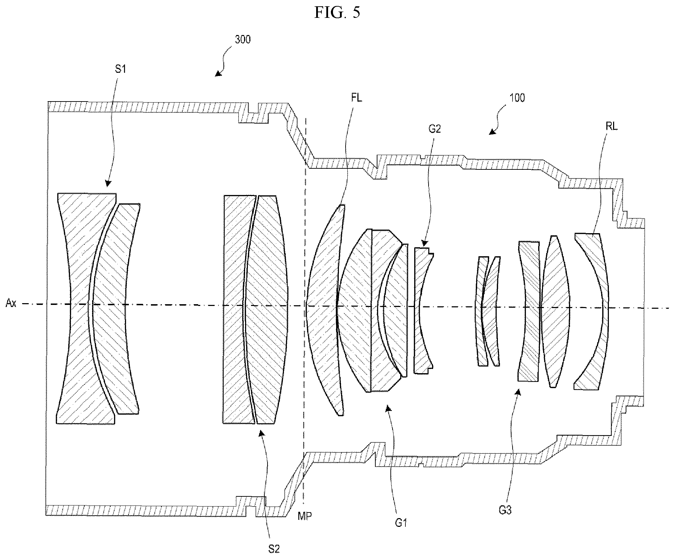

FIG. 4 is a side view of the camera lens assembly 100 equipped with the extension adapter 300 according to an embodiment of the present disclosure, and FIG. 5 is a longitudinal cross-sectional view of the camera lens assembly 100 equipped with the extension adapter 300 according to an embodiment of the present disclosure.

As shown, the barrel 307 of the extension adapter 300 and the barrel 107 of the camera lens assembly 100 may have the manual ring 25 and the manual ring 20 capable of moving the internal lenses, respectively.

In this regard, mutual coupling between the adapter mount 310 and the second lens mount 110-2 may allow the extension adapter 300 to be mounted on the camera lens assembly 100. In this regard, a boundary line between the adapter mount 310 and the second lens mount 110-2 is indicated by MP. In mounting the extension adapter 300 on the camera lens assembly, the special lenses S1 and S2 inside the adapter mount 310 and the optical lenses G1, G2, and G3 inside the second lens mount 110-2 may be aligned along the direction of the optical axis Ax.

Therefore, the light incident from the subject first passes through the special lenses S1 and S2 of the extension adapter 300 and then passes through the optical lenses G1, G2, and G3 of the camera lens assembly 100.

Referring to FIG. 5, inside the camera lens assembly 100, the plurality of optical lenses including the first lens FL to the last lens RL are aligned along the optical axis Ax.

The plurality of optical lenses may be classified into a plurality of groups G1, G2, and G3 according to optical functions thereof. The second group G2 may be a focusing lens group composed of a single lens. The first group G1 and the third group G3 are fixed. The focusing is performed by moving only the second group G2 composed of a focusing lens. Thus, an entire length of the optical system may be fixed regardless of the focusing, thereby reducing a size of the

Further, inside the extension adapter 300, a number of special lenses S1 and S2 are aligned along the optical axis Ax. The special lens S 1 of a front group may be a movable lens, while the special lens S2 of a rear group may be a fixed lens. For example, the special lens S1 of the front group may be an anamorphic focusing lens that moves according to the rotation of the manual ring 25.

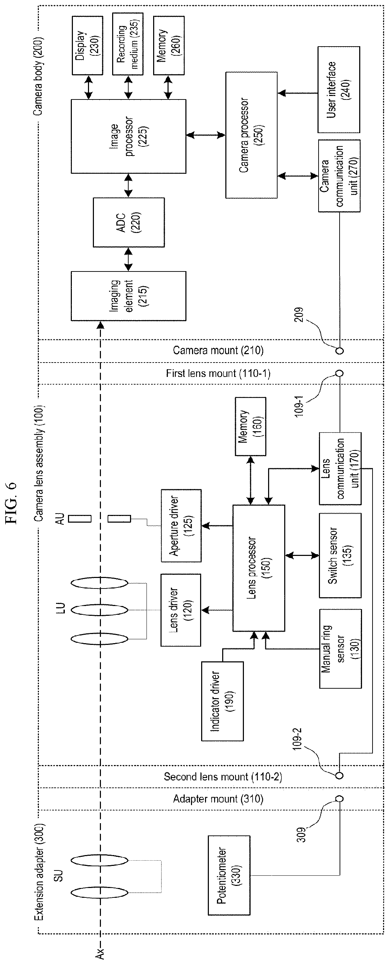

FIG. 6 is a block diagram showing an internal configuration of each of the extension adapter 300, the camera lens assembly 100, and the camera body 200 according to an embodiment of the present disclosure.

The camera body 200 includes the camera mount 210 coupled to the first lens mount 110-1 of the camera lens assembly 100 and the camera housing 203 receiving therein the multiple components such as an imaging element 215.

The camera body 200 may include the imaging element 215 which is composed of CCD (Charge Coupled Device) or CMOS (Complementary Metal-Oxide Semiconductor) and which converts light information of a subject obtained via the camera lens assembly 100 into an electrical signal. The optical information of the subject obtained from the imaging element 215 is transmitted to the image processor 225 via the analog-digital converter (ADC) 220 that converts an analog electrical signal into a digital signal. The image processor 225 performs various image processing on the digital signal to generate an image signal, and displays the image signal (still image or moving image) on the display 230 or records the same into the recording medium 235. Further, the memory 260 functions as a buffer when the image signal is processed.

Further, the camera body 200 further includes the camera communication unit 270 communicating with the lens communication unit 170 of the camera lens assembly 100, and the camera processor 250 as a CPU for controlling the camera communication unit 270, the imaging element 215, the image processor 225, and the user interface 240. A user may transmit various commands to the camera processor 250 via the user interface 240.

In one example, the camera lens assembly 100 includes the lens barrel 107 and the first lens mount 110-1. Electrical communication between the camera lens assembly 100 and the camera body 200 may be carried out between the lens communication unit 170 having the plurality of electric connectors 109 and the camera communication unit 270 having the plurality of electric connectors 209 as respectively and electrically connectable to each other. Accordingly, various types of information such as power supply or control information may be exchanged between the camera processor 250 and a lens processor 150.

In addition to the first lens mount 110-1, the camera lens assembly 100 may further include the optical lenses LU including a zooming lens that moves during zooming, a focusing lens that moves during focusing, and a fixed lens that performs basic optical functions, and the aperture unit AU.

The camera lens assembly 100 further includes the lens driver 120 for driving the zooming lens or focusing lens and the aperture driver 125 for driving the aperture unit AU.

The camera lens assembly 100 further includes the lens communication unit 170 for communicating with the camera body 200 and the extension adapter in a bi-directional manner, the lens processor 150 as a CPU for controlling the communication unit 170, the memory 160 as a buffer for temporarily storing therein information processed by the lens processor 150. The lens processor 150 also controls the manual ring sensor 130, the switch sensor 135, and the lens communication unit 170.

As described above, the user may select one of the plurality of functions supported by the camera lens assembly 100 using the switch 30. When the user manipulates the switch 30 for the selection, the switch sensor 135 detects a current function of the switch 30 selected by the user. The plurality of functions may include manual focus, auto focus, iris control, and the like.

Further, the user may adjust the focus of the optical system by rotating the manual ring 20 provided outside the camera lens assembly 100. The lens processor 150 transmits a driving signal corresponding to the detected manipulation of the manual ring 20 to the lens driver 120. Based on the transmitted driving signal, the lens driver 120 automatically controls the movement of the optical lens so as to correspond to a manipulation value of the manual ring 20.

In one example, the extension adapter 300 may be mounted in front of the camera lens assembly 100. This mounting is achieved via mutual coupling between the second lens mount 110-2 of the camera lens assembly 100 and the adapter mount 310 of the extension adapter 300. At this time, the second connector 109-2 is electrically connected to the adapter connector 309, such that the lens communication unit 170 may transmit and receive electrical signals to and from the extension adapter 300.

In another example, the extension adapter 300 may also have an actuator such as the lens driver 120, a processor, and a communication unit as the camera lens assembly 100 may. However, it is preferable that the extension adapter 300 has a simpler configuration than that of the camera lens assembly 100.

As shown in FIG. 6, it may suffice that the extension adapter 300 can measure the displacement of the special lens SU due to the manipulation of the manual ring 25 using a potentiometer 330 and can transmit the measured value to the camera lens assembly 100. That is, the adapter connector 309 including a contact terminal for driving the potentiometer 330 and a contact terminal for receiving a measurement value of the potentiometer 330 may be directly connected to the lens communication unit 170.

In this way, the lens communication unit 170 receives the measured value from the potentiometer 330 of the extension adapter 300, that is, the signal representing the displacement of the special focusing lens among the special lenses SU, and then the lens processor 150 calculates the displacement of the focusing lens corresponding to the measured value. Then, the lens driver 120 controls the movement of the focusing lens based on the calculated displacement of the focusing lens.

Under this operation, when a movement of a special focusing lens such as an anamorphic focusing lens within the extension adapter 300 occurs, the displacement of the focusing lens within the camera lens assembly 100 may be automatically adjusted in association with the movement of the special focusing lens. Therefore, only the manipulating of the manual ring 25 of the extension adapter 300 may allow the displacement of the general focusing lens in the camera lens assembly 100 to be automatically adjusted in conjunction with the movement of the special focusing lens.

Each component described above with reference to FIG. 6 may be implemented as a software component, such as a task performed in a predetermined region of a memory, a class, a subroutine, a process, an object, an execution thread or a program, or a hardware component, such as a Field Programmable Gate Array (FPGA) or Application Specific Integrated Circuit (ASIC). In addition, the components may be composed of a combination of the software and hardware components. The components may be reside on a computer readable storage medium or may be distributed over a plurality of computers.

And each block may represent a module, segment, or portion of code, which comprises one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although embodiments of the present disclosure have been described with reference to the accompanying drawings, the present disclosure is not limited to the above embodiments, but may be implemented in various different forms. A person skilled in the art may appreciate that the present disclosure may be practiced in other concrete forms without changing the technical spirit or essential characteristics of the present disclosure. Therefore, it should be appreciated that the embodiments as described above is not restrictive but illustrative in all respects.

## Claims

1. A camera lens assembly capable of communicating with a camera body and having a processor and a memory disposed therein, the camera lens assembly comprising:
a plurality of optical lenses accommodated in the camera lens assembly;
a first lens mount for detachably mounting the camera lens assembly to the camera body;
a first electric connector formed on a rear face of the camera lens assembly, wherein the first electric connector is electrically coupled to the camera body when the camera lens assembly is mounted on the camera body;
a second lens mount formed on a front face of the camera lens assembly, wherein the second lens mount is configured for detachably attaching an extension adapter extending an optical function of the camera lens assembly to the camera lens assembly;
a second electric connector formed on the front face of the camera lens assembly, wherein the second electric connector is electrically coupled to the extension adapter when the extension adapter is mounted on the camera lens assembly;
a lens communication unit connected to the first electric connector so as to transmit and receive an electrical signal between the camera lens assembly and the camera body, wherein the lens communication unit is connected to the second electric connector so as to transmit and receive an electrical signal between the extension adapter and the camera lens assembly; and
a lens driver for controlling a movement of each of the plurality of optical lenses, based on the electrical signal received from the camera body.

2. The camera lens assembly of claim 1, wherein the plurality of optical lenses include a first focusing lens,
wherein the extension adapter includes a second focusing lens.

3. The camera lens assembly of claim 1, wherein the second focusing lens is embodied as an anamorphic focusing lens.

4. The camera lens assembly of claim 2, wherein the second electric connector receives a signal indicating a displacement of the second focusing lens from the extension adapter,
wherein the processor calculates a displacement of the first focusing lens corresponding to the displacement of the second focusing lens,
wherein the lens driver controls a movement of the first focusing lens based on the calculated displacement of the first focusing lens.

5. The camera lens assembly of claim 4, wherein the signal indicating the displacement of the second focusing lens includes a value measured using a potentiometer disposed in the extension adapter.

6. The camera lens assembly of claim 4, wherein the second electric connector includes:
a first terminal for receiving the signal indicating the displacement of the second focusing lens from the extension adapter; and
a second terminal for supplying power generated in the camera body or the camera lens assembly to the extension adapter.

7. The camera lens assembly of claim 1, wherein the second lens mount includes a plurality of bayonet claws,
wherein the second electric connector is positioned on a portion of a circumferential area of the front face of the camera lens assembly in which the plurality of bayonet claws are absent.

8. The camera lens assembly of claim 7, wherein the second electric connector is positioned on a lower side of the front face of the camera lens assembly.

9. The camera lens assembly of claim 1, further comprising a switch for receiving a selected one of a plurality of functions provided by the camera lens assembly from a user,
wherein the lens driver controls a displacement of each of the plurality of optical lenses disposed in the camera lens assembly based on a mode indicated by the switch.
